# NEW EUROPEAN PATENT SPECIFICATION

(11) **EP 2 917 520 B2**
(45) Date of publication and mention of the opposition decision: **10.05.2023**
(45) Mention of the grant of the patent: 02.01.2019
(21) Application number: 13785659.7
(22) Date of filing: 17.10.2013
(51) Int. Cl.: F01N 3/022, F01N 3/035, F01N 3/20, F01N 13/02, F01N 3/28

(54) **CLOSE-COUPLED SCR SYSTEM**
MOTORNAHES SCR-SYSTEM
SYSTÈME DE RÉDUCTION CATALYTIQUE SÉLECTIVE PROCHE DU MOTEUR

(30) Priority: 18.10.2012 US 201261715584 P
(43) Date of publication of application: 16.09.2015
(73) Proprietor: Johnson Matthey Public Limited Company, London EC4A 4AB (GB)
(72) Inventor: PHILLIPS, Paul, Richard, Royston Hertfordshire SG8 5HE (GB); WYLIE, James, Alexander, Royston Hertfordshire SG8 5HE (GB)
(74) Representative: Nunn, Andrew Dominic
(86) International application number: PCT/IB2013/059427
(87) International publication number: WO 2014/060987

(56) References cited:
- EP-A1- 2 466 084
- WO-A1-2012/080608
- WO-A1-2012/123660
- JP-A- 2008 255 890
- US-A1- 2008 127 638
- US-A1- 2010 180 579
- US-A1- 2011 138 776
- US-A1- 2011 162 347
- SURESH T. GULATI et al.: "New developments in diesel oxidation catalysts and diesel particulate filters", SAE Paper No. 2003-26-0017, 2003,

## Description

### FIELD OF THE INVENTION

This invention concerns the purification of exhaust gases from combustion engines.

### BACKGROUND OF THE INVENTION

One of the most burdensome components of vehicular exhaust gas is NOx, which includes nitric oxide (NO), nitrogen dioxide (NO₂), and nitrous oxide (N₂O). The production of NOx is particularly problematic for lean-burn engines, such as diesel engines. To mitigate the environmental impact of NOx in exhaust gas, it is desirable to eliminate these undesirable components, preferably by a process that does not generate other noxious or toxic substances.

In addition to the production of NOx gases, lean-burn combustion engines, because of their combustion characteristics, have the disadvantage of generating particulate matter, or soot, on which a variety oforganic substances may be absorbed, including unburned hydrocarbons and sulfuric acid produced by oxidation of sulfur dioxide derived from sulfur species present in the fuel or in lubricants. The exhaust gas of diesel engines tends to have more soot compared to gasoline engines.

Because exhaust gases from lean-burn combustion engines contribute to air pollution, treatment systems are critical to minimize the polluting effects of operating a lean-burn combustion engine.

Two methods are commonly employed to reduce pollutants within the exhaust gases of lean burn combustion engines. The first method converts NOx in a diesel exhaust gas into more benign substances, also known as Selective Catalytic Reduction (SCR). An SCR process involves the conversion of NOx, in the presence of a catalyst and a reducing agent, typically anhydrous ammonia, aqueous ammonia, or urea, into elemental nitrogen (N₂) and water. The second method reduces soot emissions by passing the soot-containing exhaust gas through a particulate filter. However, the accumulation of soot particles on the filter can cause an undesirable increase in the back pressure of the exhaust system during operation, thereby decreasing efficiency. To regenerate the filter, the accumulated carbon-based soot must be removed from the filter, for example by periodically combusting the soot by passive or active oxidation at high temperatures.

It is known from WO 99/39809 to combine a number of separate individual components in an exhaust system, including an SCR catalyst, for treating, among others, particulate matter and nitrogen oxides. For example, a stream of exhaust gases from an engine combined with a reducing agent may first flow through a flow-through monolith incorporating the SCR catalyst to reduce NOx and then the gases are further treated downstream to remove particulate matter by passing through a particulate matter filter. The drawback to such designs is that increasing the number of exhaust gas after-treatment components increases the overall cost of the exhaust system, and also increases the total volume and weight of the system, which is particularly disadvantageous for vehicles. The heavier a vehicular exhaust system overall, the more fuel is required by the vehicle to transport it.

To overcome the drawbacks noted above, exhaust systems having a single component capable of reducing NOx and particulate matter have been designed. US Pat. Pub. 2010/0180580 discloses a system of combining an SCR catalyst with a wall-flow filter. Wall-flow filters contain multiple adjacent, parallel channels that are capped on one end, wherein the capping occurs on opposite ends of adjacent channels in an alternating pattern. Capping alternating ends of channels prevents the gas entering the inlet face of the filter from flowing straight through channel and exiting that channel. Instead, the exhaust gas enters the front of the substrate and travels into about half of the channels where it is forced across the channel walls prior to exiting the outlet face of the substrate. The catalyst is typically applied to the walls of the wall-flow filter in the form of an aqueous mixture, or washcoat, and then calcined to adhere to the surface of the walls.

EP2466084 discloses an exhaust system for an automotive vehicle and purification method of exhaust gas produced by an internal combustion engine of said vehicle.

The disadvantage of certain SCR wall-flow filters is that a limited amount of catalyst can be applied to its surface. A thick washcoat will narrow the channels and, in some cases, pores and impede the flow of gas contributing to back pressure and negatively affect the efficiency of the system. A known method for reducing back pressure involves limiting the volume of applied washcoat. Less washcoat results in less catalyst and the capacity of the filter to convert NOx. Finally, coating SCR catalyst to the surface of a wall-flow filter adds to the overall weight of the filter. Increased mass will require more time and energy to heat the wall-flow filter to the temperatures necessary for catalyst activation, which is a considerable disadvantage at start-up when the engine has not yet reached its normal steady state operating temperatures. To increase the rate of heating an SCR wall-flow filter, the filter can be disposed close to the engine.

A known method for overcoming the disadvantages associated with an SCR wall-flow filter is to place an SCR flow-through monolith upstream of the wall-flow filter. Flow-through monoliths having a so-called honeycomb geometry comprise multiple adjacent, parallel channels that are open on both ends and generally extend from the inlet face to the outlet face of the substrate. Each channel typically has a square, round, hexagonal, or triangular cross-sectional. Catalytic material is applied to the substrate typically as a washcoat or other slurry that can be embodied on and/or in the walls of the substrate.

### SUMMARY OF THE INVENTION

The present invention provides a system for treating exhaust gases containing NOₓ from an engine as defined in the claims appended hereto.

Applicants have discovered a system for treating the exhaust gas from a lean burn combustion engine that reduces NOₓ and soot. The system comprises a compact SCR flow-through monolith that is situated upstream of a close-coupled SCR wall-flow filter.

As used herein, the term "close-coupled" refers to a component position in an engine's exhaust gas treatment system which less than about 1 meter downstream of the engine's exhaust gas manifold or turbocharger, preferably about 0.05 to about 0.5 meters. During start-up oroperating an engine under heavy load, components in a close-coupled position are typically exposed to higher exhaust gas temperatures compared to components further downstream. It has been discovered that the combination of a compact SCR flow through monolith and a separate, downstream close coupled SCR wall flow filter, has a synergistic effect that is not seen in combinations of larger SCR flow through monoliths and downstream SCR wall flow filters or SCR wall flow filters that are not close-coupled to the engine. In addition, this effect is not seen in a single SCR wall flow filter having a volume and a catalyst loading equivalent to the combined SCR flow through monolith and SCR wall flow filter of the present invention. In particular, the synergistic combination of SCR components yields a soot combustion efficiency that is higher than conventional SCR flow through monolith and SCR wall flow filter combinations. Moreover, the synergistic combination of components produces higher NOₓ conversion compared to a single, close-coupled SCR wall flow filter having a volume and catalyst loading comparable to the synergistic combination of components. That is, the synergistic combination of components of present invention improves the overall NOₓ conversion efficiency of an SCR / soot filtration system without the need for additional catalyst, thus reducing the cost of the system, while also providing high temperature stability of the wall flow filter to facilitate consistent filter regeneration.

The compact SCR flow through monolith is characterized as having a lower heat capacity compared to the downstream SCR wall-flow filter. The lower heat capacity can result from an SCR flow through material having a lower specific heat capacity and/or a smaller volume or mass relative to the SCR wall-flow filter.

Accordingly, an aspect of the invention provides a system for treating exhaust gases containing NOₓ from an engine, said system comprising (a) a flow-through monolith having a first catalytic composition for selective catalytic reduction of NOₓ and having a first volume; (b) a close-coupled particulate matter filter having a second catalytic composition for reduction of particulate matter and selective catalytic reduction of NOₓ and having a second volume; and (c) a volume ratio of the first volume to the second volume of less than about 1:2; wherein said flow-through monolith is in fluid communication with, and incorporated upstream of, said particulate matter filter.

There is also disclosed a method for treating an engine exhaust gas stream containing NOₓ and soot comprising: contacting said exhaust gas stream, in the presence of a reductant, with a flow-through monolith having a first SCR catalytic composition loading and a first volume to produce an intermediate gas stream wherein a first portion of said NOₓ has been converted to N₂
and O₂; contacting said intermediate gas stream with a close-coupled catalytic particulate matter filter having a second SCR catalytic composition loading and a second volume, wherein said second volume is at least about twice the first volume, to trap a portion of the soot and produce a clean gas stream wherein a second portion of said NOₓ has been converted to N₂ and O₂; oxidizing said portion of the soot at a soot oxidation temperature to regenerate the catalytic particulate matter filter; heating said catalytic close-coupled flow-through monolith to an SCR light off temperature before heating said catalytic particulate matter filter to an SCR light off temperature; and maintaining, under low load conditions, said soot oxidation temperature of the catalytic particulate matter filter for a longer period of time as compared to a catalytic particulate matter filter having a volume equal to said first and second volumes combined.

### BRIEF DESCRIPTION OF THE DRAWINGS

Figure 1 is a schematic representation of one embodiment of an engine exhaust gas treatmentsystem according to the present invention; and
Figure 2 graphically illustrates the total mass of NOx converted at engine start-up by a system including only an SCR wall-flow filter and a system according to the present invention.

### DETAILED DESCRIPTION

This invention provides a novel system for treating the exhaust gas from a lean burn combustion engine comprising temperature stabilized series of SCR catalysts to produce improved NOₓ conversion and higher soot combustion efficiency. In particular, the invention involves a system for reducing soot and treating NOₓ in an exhaust gas comprising a compact SCR flow-through monolith situated upstream of a close-coupled SCR wall-flow filter. The invention is believed to have particular application to the exhaust gases from heavy duty diesel engines, especially vehicle engines, e.g. truck or bus engines, but is not to be regarded as being limited thereto. Other applications might be LDD (light duty diesel), GDI (gasoline direct injection), CNG (compressed natural gas) engines, ships or stationary sources. For simplicity, however, the majority of this description concerns such vehicle engines.

Because the SCR wall-flow filter is close-coupled, the overall length of the compact SCR flow-through monolith used in the present invention should be less than the space provided between the SCR wall-flow filter and the engine outlet in order to also accommodate other components of the exhaust system, such as the reducing agent injection point or an oxidation catalyst. The compact SCR flow-through monolith should also be light-weight in order to heat up quickly to the activation temperature of the catalyst during engine start-up. Prior to the present invention, the structural integrity of such a light-weight compact flow-through monolith was questionable.

The compact monolith assists with NOₓ reduction, particularly during engine startup. The heavier SCR wall-flow filter upon heating to the activation temperature of its SCR catalyst (i.e., light-off temperature) during steady state operating temperatures of the engine will then convert a greater portion of NOₓ in the exhaust gases following startup. Because the SCR wall-flow filter is heavier and close-coupled to the engine, it will take longer to cool and therefore maintain NOₓ conversion while the engine is operating under low load conditions or is idling, thus improving its soot oxidation efficiency.

Because the compact SCR flow-through monolith of the present invention is small and therefore has limited surface area to which a catalyst may be applied, it is preferred to provide that the monolith be heavily loaded with catalyst per unit volume of monolith. It is also preferred that the compact SCR flow-through monolith have a catalyst loading per unit volume that is greater than the catalyst loading per unit volume of substrate on the SCR wall-flow filter used in the present inventive system. The compact monolith has a preferred catalyst loading range of about 3 to about 15 g/in³, more preferably about 4 to about 10 g/in³. In comparison, the SCR wall-flow filter preferably has a catalyst loading range of about 1 to about 2.8 g/in³, for example 1.5 to 2.5 g/in³. The ratio of SCR catalyst loading per unit volume on the compact monolith compared to the wall flow particulate filter is about 15:1 to about 1.5:1, for example about 4:1 to about 2:1. The SCR catalyst on the flow-through monolith and the SCR catalyst on the wall-flow filter may be the same catalyst or different catalyst. In certain embodiments, the SCR catalyst on the upstream flow-through monolith is an iron promoted zeolite and the SCR catalyst on the downstream wall-flow filter is a copper promoted zeolite.

The dimensions of the compact monolith are also selected, in part, based upon the desired heat capacity per unit volume for the compact monolith. The "volume" as used herein is determined by the outer dimensions, e.g. length and diameter, of the monolith or filter. As mentioned above, the compact size and weight of the SCR flow-through monolith enable it to heat up quickly during engine-startup to the activation temperature of the catalyst and provide an exhaust gas treatment system with improved NOₓ conversion. The desired dimensions of the compact monolith may be expressed relative to the size of the downstream SCR wall-flow filter. The volume of the compact monolith of the present invention is preferably about 10% to about 75% of the volume of the SCR wall-flow filter, more preferably about 15% to about 50%, more preferably about 15% to about 40%, and most preferably about 20% to about 25%. The ratio of volume of the flow-through monolith to the volume of the wall-flow filter is about 1:10 to about 1:2, or about 1:6 to about 1:4.

In addition to selection of the dimensions of the compact monolith, the type of materials used to make the compact monolith are selected based upon the desired heat capacity per unit volume of the compact monolith because heat capacity is dependent on the properties of the materials of the object to be heated. Similar to volume, the desired heat capacity per unit volume (i.e., specific heat capacity) of the compact monolith may be expressed relative to the specific heat capacity of the wall-flow filter. The specific heat capacity of the compact flow-through monolith is about 20% to 80% of the specific heat capacity of the wall-flow filter, more preferably 25% to 75%, most preferably 35% to 65%.

In a preferred embodiment, the compact monolith used in the present invention is manufactured by first preparing an aqueous mixture including a catalytic component and optionally a binder, and applying the aqueous mixture to an inert substrate in the form of a monolith that is then dried and calcined. Because a light-weight monolith is desired, a material should be selected that will provide thin walls to allow an effective amount of the catalyst to be applied to its surface without sacrificing the mechanical stability of the monolith for long-term application in the present invention.

The flow through monolith is preferably a honeycomb having a plurality of channels that are open on both ends and traverse the monolith in an approximately parallel direction. The cross-sectional shape of the channels is not particularly limited and can be, for example, square, circular, oval, rectangular, triangular, hexagonal, or the like. Preferably, the flow through monolith (inert substrate) contains about 150 to about 800 channels per square inch (cpsi), and more preferably about 300 to about 400 cpsi or about 600 to about 800 cpsi. In certain embodiments, the flow through monolith (inert substrate) can have walls having an average wall thickness of less than about 0.30 mm, less than about 0.25 mm, less than about 0.22 mm, or less than about 0.20 mm. In certain embodiments the cell walls will have an average thickness of about 0.30 mm to about 0.25 mm, about 0.25 mm to about 0.22 mm, or about 0.22 mm to about 0.20 mm.

The flow-through monolith is preferably constructed of one or more materials that include, as a predominant phase, ceramic, cermet, metal, oxides, and combinations thereof. By combinations is meant physical or chemical combinations, e.g., mixtures, compounds, or composites. Some materials that are especially suited to the practice of the present invention are those made of cordierite, mullite, clay, talc, zircon, zirconia, spinel, alumina, silica, borides, lithium aluminosilicates, alumina silica, feldspar, titania, fused silica, nitrides, borides, carbides, e.g., silicon carbide, silicon nitride or mixtures of these. A particularly preferred material is silicon carbide.

According to the present invention, the system includes an SCR wall-flow filter that is downstream of the compact SCR flow-through monolith, but close-coupled to the engine. Such SCR wall-flow filters are known in the art and may include the same or different catalysts as the compact flow-through filter used in the present inventive system. The catalyst is incorporated in the wall-flow filter by applying a washcoat of the catalyst to a substrate prior to calcination. A vacuum is commonly used to draw the washcoat through the filter walls. Conventional wall-flow filter substrates for diesel engines typically having several parallel channels and contain about 250 - 800 cpsi, for example about 250 - 350 cpsi, and are provided in the form of either a ceramic or metallic honeycomb. The channels are defined by porous walls and each channel has a cap at either the inlet or outlet face of the substrate. Wall-flow filter substrates for use in vehicular exhaust systems such as these are commercially available from a variety of sources and can have any shape suitable for use in an exhaust system.

The walls of the wall-flow filter have a porosity and pore size that make it gas permeable, but allow it to trap a major portion of the particulate matter, such as soot, from the exhaust gas as it passes through the wall. The substrate may be constructed of a porous material having a porosity of at least about 35%, more preferably about 45 - 55%. The mean pore size of the porous substrate is also important for filtration. Mean pore size can be determined by any acceptable means, including by mercury porosimetry. The mean pore size of the porous substrate should be of a high enough value to promote low backpressure, while providing an adequate efficiency by either the substrate per se, by promotion of a soot cake layer on the surface of the substrate, or combination of both. Preferred porous substrates have a mean pore size of about 10 to about 40 µm, for example about 20 to about 30µm, about 10 to about 25µm, about 10 to about 20µm, about 20 to about 25 µm, about 10 to about 15µm, and about 15 to about 20 µm.

Preferred wall-flow substrates are high efficiency filters. Efficiency is determined by the weight percent of particulate matter having a specific size removed from the untreated exhaust gas upon passing through a wall-flow substrate. Therefore, efficiency is relative to soot and other similarly sized particles and to particulate concentrations typically found in conventional diesel exhaust gas. Particulates in diesel exhaust can range in size from 0.05 microns to 2.5 microns. Thus, the efficiency is based on this range. Wall flow filters for use with the present invention preferably have an efficiency of at least 70%, at least about 75%, at least about 80%, or at least about 90%. In certain embodiments, the efficiency will preferably be from about 75 to about 99%, about 75 to about 90%, about 80 to about 90%, or about 85 to about 95%.

Catalysts for use in accordance with the present invention include any suitable catalyst that is capable of reducing nitrogen oxides in the presence of a reductant. Catalysts include metal loaded support materials. Suitable catalysts include vanadia, titania, tungsten, or combinations thereof, and also metal, particularly base-metal, promoted molecular sieves, including but not limited, to copper and/or iron promoted aluminosilicates and sil-icoaluminophosphates. A particularly preferred metal is Cu. In one embodiment, the transition metal loading is about 0.1 to about 10 wt% of the molecular sieve, for example from about 0.5 wt% to about 5 wt%, from about 0.5 to about 1 wt%, and from about 2 to about 5 wt%. The type and concentration of the transmission metal can vary according to the host molecular sieve and the application. Aluminosilicates preferable have a silica-to-alumina ratio (SAR) of about 15 to about 50, for example from about 20 to about 40 or about 25 to about 30.

The molecular sieves have a framework suitable for SCR processes, including but not limited to Beta, CHA, AEI, LEV, MFI, ERI, and mixtures or intergrowths thereof.

It is highly preferred that the SCR catalyst present in either the flow-through monolith or the wall-flow filter is disposed in a manner that minimizes any restriction the flow of exhaust gas through the component. More than one catalyst may be layered on top of each other. The catalyst material may also be disposed, so as to form one or more concentration gradients along the channel walls or across the channels between the upstream side and downstream side of the wall. Different catalyst may be loaded along the channel walls or on the upstream and corresponding downstream side of the walls in a wall-flow filter.

The system of the present invention may also include a source of reductant. The reductant (also known as a reducing agent) for SCR processes broadly means any compound that promotes the reduction of NOx in an exhaust gas. Examples of reductants useful in the present invention include ammonia, hydrazine, or any suitable ammonia precursor, such as urea ((NH₂)₂CO), ammonium carbonate, ammonium carbamate, ammonium hydrogen carbonate or ammonium formate, and hydrocarbons such as diesel fuel, and the like. Particularly preferred reductants are nitrogen based with ammonia being particularly preferred. Other reductants include hydrocarbons, such as propene and diesel fuel.

The source of reductant fluid may use existing technology to inject fluid into the gas stream. For example, a mass controller can control supply of compressed NH₃, which may be injected through an annular injector ring mounted in an exhaust pipe. The injector ring may have a plurality of injection ports arranged around its periphery. Conventional diesel fuel injection systems include pumps and injector nozzles to inject urea. A stream of compressed air may also be injected around the nozzle to provide good mixing and cooling. In a preferred embodiment of the invention, the injection point of reductant is located upstream of the compact SCR flow-through monolith. A second injection point may optionally be included between the compact monolith and the SCR wall-flow filter.

A difficulty in treating NOx from mobile source applications is that the quantity of NOx present in the exhaust gas is transient, i.e. it varies with driving conditions, such as acceleration, deceleration and cruising at various speeds. The transient nature of the NOx component in the mobile application exhaust gas presents a number of technical challenges, including correct metering of nitrogenous reductant to reduce sufficient NOx without waste or emission of nitrogenous reductant to atmosphere.

In practice, SCR catalysts can preferably adsorb (or store) nitrogenous reductant, thus providing a buffer to the appropriate supply of available reductant. Technologists use this phenomenon to calibrate appropriate nitrogenous reductant injection to exhaust gas. Poor storage capacity will require more frequent injections of reductant into the system during operation. A desirable SCR catalyst has sufficient NH₃ storage capacity at a given temperature (to ensure any excess NH₃ is not "slipped" past the catalyst and to allow conversion to continue if NH₃ is not present in the feed) and high activity independent of the fraction of NH₃ fill level (fill level is defined relative to a saturated NH₃ storage capacity). The NH₃ fill level can be expressed as the amount of NH₃ (for example in grams) present on the complete catalyst (for example in liters) relative to a maximum fill level at a given set of conditions. It may be desirable to incorporate an ammonia slip catalyst downstream of the SCR wall-flow filter, to remove any NH₃ or derivatives thereof which could pass through unreacted or as byproducts. Ammonia slip catalyst can include a dual layer catalyst having a layer of reductive component, such as a metal promoted zeolite, and a layer of oxidative component, such as platinum or palladium.

The current inventive exhaust gas treatment system may also optionally include an oxidation catalyst upstream of the compact SCR flow-through monolith.. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature at oxidation catalyst inlet of 250 °C to 450 °C. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

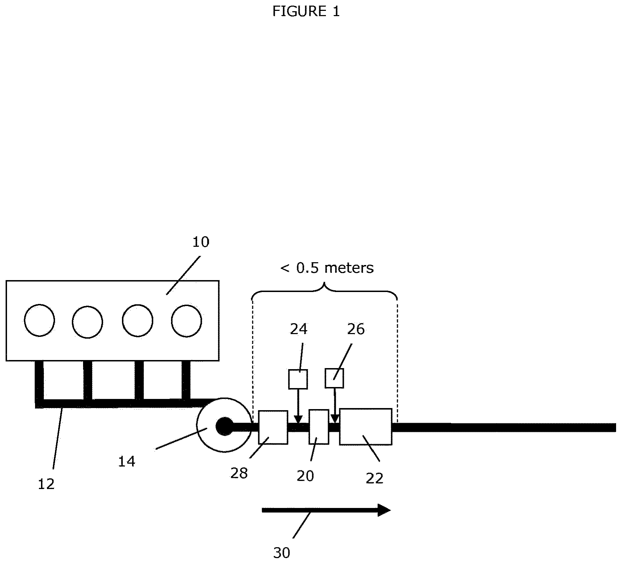

There is also disclosed an engine combined with an exhaust system according to the present invention. The engine can be a diesel engine, a lean-burn gasoline engine, or an engine powered by liquid petroleum gas or natural gas. As seen in Fig. 1, a lean burn combustion engine (10) is shown and has an exhaust manifold (12) and optional turbocharger (14) from which an exhaust gas stream of the lean burn combustion engine (10) travels in direction (30) first to an optional oxidation catalyst (28), then to a compact SCR flow-through monolith (20) and then to a close-coupled SCR wall-flow filter (22). Mounted close and upstream to the compact monolith (20) is an injection point for a reductant (24), such as ammonia or urea. A second and optional injection point (26) for a reductant is located between the compact monolith (20) and the wall flow filter (22). The gas stream exiting the SCR wall-flow filter (22) is treated, such that the concentration of NOₓ gases and particulate matter has been reduced compared to the exhaust gas exiting the engine. The location of the SCR wall-flow filter (22) relative to the manifold (12) or optional turbocharger (14) is such that the exhaust gas travels less than 0.5 meters, or even less than 0.3 meters, between the outlet of the manifold or turbocharger and the outlet of the wall-flow filter. The exhaust gas flow distance between the inlet of the compact monolith (20) and the outlet of the manifold (12) or turbocharger (14) should is not particularly limited, and is preferably minimized to allow for the optional oxidation catalyst (28) and for adequate reductant injection and mixing. The exhaust gas flow distance between the inlet of the wall-flow filter (22) and the outlet of the compact monolith (20) is not particularly limited, provided at least some distance separates the two components. Examples of suitable distances include 0.05 meters, 0.1 meters, and 0.2 meters. Components 20, 22, 24, 26, and 28 are all in fluid communication with each other via an exhaust gas system conduit or other means of channeling the engine's exhaust gas through the treatment system.

There is also disclosed a method for the reduction of NOx in an exhaust gas stream from a combustion engine, which comprises introducing a reducing agent to the exhaust stream, conducting the exhaust
gas stream through a compact SCR flow-through monolith, and finally, conducting the gas exiting the compact flow-through monolith through a close-coupled SCR wall-flow filter. Particulate matter within the exhaust gas is simultaneously trapped within the SCR wall-flow filter. In one not presently claimed embodiment, the temperature of the exhaust gas stream at the inlet of the close-coupled SCR wall-flow filter under heavy load is at least 600°C.

The method may also include the step of regenerating the SCR wall-flow filter. During normal operation of the exhaust system, the soot and other particulates accumulate on the inlet sides of the walls which lead to an increase in backpressure. To alleviate this increase in backpressure, the filter substrates are continuously or periodically regenerated by active or passive techniques including combusting the accumulated soot by known techniques including, for example in the presence of nitrogen dioxide generated from an upstream oxidation catalyst. As mentioned above the present inventive exhaust gas treatment system maintains the SCR wall-flow filter in a close-coupled position which therefore provides the advantage of being close to the heat source allowing for easier heat management and enabling filter regeneration.

The above method can be performed on a gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators, etc. In a particular not presently claimed embodiment, the method is used for treating exhaust gas from a vehicular lean burn internal combustion engine, such as a diesel engine, a lean-burn gasoline engine, or an engine powered by liquid petroleum gas or natural gas.

According to a further aspect, the system can include means, when in use, for controlling the metering of nitrogenous reductant into the flowing exhaust gas only when it is determined that the catalyst is capable of catalyzing NOx reduction at or above a desired efficiency, such as at above 100 °C, above 150 °C or above 175 °C. The determination by the control means can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR and boost pressure.

In a particular embodiment, metering is controlled in response to the quantity of nitrogen oxides in the exhaust gas determined either directly (using a suitable NOx sensor) or indirectly, such as using pre-correlated look-up tables or maps--stored in the control meanscorrelating any one or more of the abovementioned inputs indicative of a condition of the engine with predicted NOx content of the exhaust gas. The metering of the nitrogenous reductant can be arranged such that 60% to 200% of theoretical ammonia is present in exhaust gas entering the SCR catalyst calculated at 1:1 NH₃/NO and 4:3 NH₃/NO₂. The control means can comprise a preprogrammed processor such as an electronic control unit (ECU).

### EXAMPLE

The total NOₓ conversion at engine startup for a system according to the present invention was compared with the total NOₓ conversion of a system that included only an SCR wall-flow filter. The SCR wall-flow filter comprised an inert silicon carbide substrate having a porosity of 52% and a mean pore size of 20 microns. The volume of the wall-flow filter was 2.5L. The volume of the compact monolith was 0.625L. Prior to testing, the compact monolith and SCR wall-flow filter were aged at 800° C for 16 hours. The two systems were tested with a 1.9L engine in an automobile subjected to testing conditions associated with the MVEG drive cycle with urea injected as the reductant at 180° C. The resulting NOx emissions for the two systems and a control plotted over time.

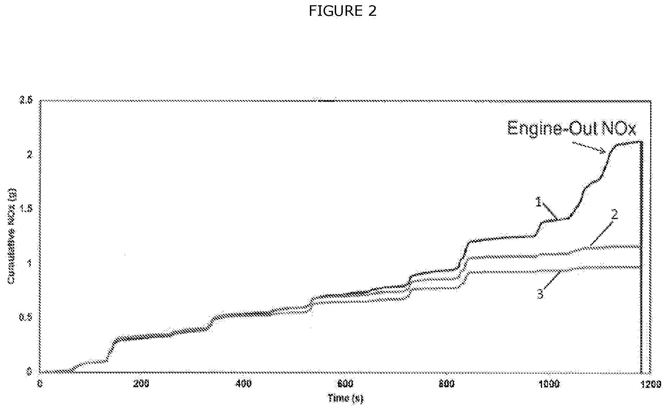

The NOx conversion potential provided by the present invention is demonstrated in Figure 2, which shows a decrease in the total output of NOₓ in the exhaust gases after passing through a system of the present invention compared to a system that utilizes an SCR wall-flow filter alone.

## Claims

1. A system for treating exhaust gases containing NOx from an engine, said system comprising:
a flow-through monolith (20) having a first catalytic composition for selective catalytic reduction of NOx and having a first volume;
a close-coupled wall-flow particulate matter filter (22) having a second catalytic composition for reduction of particulate matter and selective catalytic reduction of NOx and having a second volume; and
a volume ratio of the first volume to the second volume of 1:10 to 1:2, wherein said flow-through monolith (20) is in fluid communication with, and incorporated upstream of, said particulate matter filter (22) and
wherein said flow-through monolith (20) has a lower heat capacity relative to said particulate matter filter (22) and said flow-through monolith (20) has a specific heat capacity that is 20 to 80% of the specific heat capacity of said particulate matter filter (22), and
wherein the first catalytic composition is present on the flow-through monolith (20) at a first loading, in weight per unit volume, and the second catalytic composition is present on the wall-flow particulate matter filter (22) at a second loading, in weight per unit volume, and the ratio of the first loading to the second loading is 15:1 to 1.5:1.

2. The system of claim 1, wherein said first and second catalytic compositions comprise a base-metal promoted aluminosilicate or silicoaluminophosphate molecular sieve.

3. The system of claim 2, wherein said flow-through monolith (20) has an SCR catalyst loading, preferably 0.183 to 0.915g/cm³ (3 to 15 g/in³), which is greater than an SCR catalyst loading on said particulate matter filter (22).

4. The system of claim 1, wherein said first and second catalytic compositions are different, provided that at least one of said first and second catalytic compositions comprise a base-metal promoted aluminosilicate or silicoaluminophosphate molecular sieve.

5. The system of claim 1, wherein said second catalytic composition for selective catalytic reduction of NOx is coated and/or impregnated on a downstream side of said particulate matter filter (22).

6. The system of claim 1, wherein said second catalytic composition for selective catalytic reduction of NOx is coated and/or impregnated on an upstream side of said particulate matter filter (22).

7. The system of claim 1, wherein said particulate matter filter (22) is about 0.01 to about 0.25 meters downstream of the flow-through monolith (20).

8. The system of claim 7, further comprising a source of reductant injection, in fluid communication with and disposed between said flow-through monolith (20) and said particulate matter filter (22).

9. The system of claim 1, wherein the first catalytic composition comprises as iron promoted zeolite and the second catalytic composition comprises a copper promoted zeolite.

## Patentansprüche

1. System zum Behandeln von Abgasen, die NOx enthalten, aus einem Motor, das System umfassend:
einen Durchflussmonolithen (20), der eine erste katalytische Zusammensetzung für eine selektive katalytische Reduktion von NOx aufweist und ein erstes Volumen aufweist;
einen dicht gekoppelten Wandströmungspartikelfilter (22), der eine zweite katalytische Zusammensetzung für die Reduktion von Partikeln und selektive katalytische Reduktion von NOx aufweist und die ein zweites Volumen aufweist; und
ein Volumenverhältnis des ersten Volumens zu dem zweiten Volumen von 1 : 10 bis 1 : 2, wobei der Durchflussmonolith (20) in Fluidverbindung mit dem Partikelfilter (22) steht und vorgelagert davon eingebaut ist, und
wobei der Durchflussmonolith (20) eine geringere Wärmekapazität in Bezug auf den Partikelfilter (22) aufweist und der Durchflussmonolith (20) eine spezifische Wärmekapazität aufweist, die 20 bis 80 % der spezifischen Wärmekapazität des Partikelfilters (22) beträgt, und
wobei die erste katalytische Zusammensetzung bei einer ersten Beladung in Gewicht pro Volumeneinheit auf dem Durchflussmonolith (20) vorhanden ist und die zweite katalytische Zusammensetzung bei einer zweiten Beladung in Gewicht pro Volumeneinheit auf dem Wandströmungspartikelfilter (22) vorhanden ist, und das Verhältnis der ersten Beladung zu der zweiten Beladung 15 : 1 bis 1,5 : 1 beträgt.

2. System nach Anspruch 1, wobei die erste und die zweite katalytische Zusammensetzung ein unedles metallgefördertes Aluminosilikat- oder Silicoaluminophosphat-Molekularsieb umfassen.

3. System nach Anspruch 2, wobei der Durchflussmonolith (20) eine SCR-Katalysatorbeladung, vorzugsweise 0,183 bis 0,915 g/cm³ (3 bis 15 g/in³), aufweist, die größer als eine SCR-Katalysatorbeladung auf dem Partikelfilter (22) ist.

4. System nach Anspruch 1, wobei die erste und die zweite katalytische Zusammensetzung unterschiedlich sind, vorausgesetzt, dass mindestens eine der ersten und der zweiten katalytischen Zusammensetzung ein unedles metallgefördertes Aluminosilikat- oder Silicoaluminophosphat-Molekularsieb umfassen.

5. System nach Anspruch 1, wobei die zweite katalytische Zusammensetzung für die selektive katalytische Reduktion von NOx auf einer nachgelagerten Seite des Partikelfilters (22) beschichtet und/oder imprägniert ist.

6. System nach Anspruch 1, wobei die zweite katalytische Zusammensetzung für die selektive katalytische Reduktion von NOx auf einer vorgelagerten Seite des Partikelfilters (22) beschichtet und/oder imprägniert ist.

7. System nach Anspruch 1, wobei der Partikelfilter (22) etwa 0,01 bis etwa 0,25 Meter nachgelagert von dem Durchflussmonolithen (20) liegt.

8. System nach Anspruch 7, ferner umfassend eine Reduktionsmittelinjektionsquelle in Fluidverbindung mit und die zwischen dem Durchflussmonolithen (20) und dem Partikelfilter (22) angeordnet.

9. System nach Anspruch 1, wobei die erste katalytische Zusammensetzung einen eisengeförderten Zeolithen umfasst und die zweite katalytische Zusammensetzung einen kupfergeförderten Zeolithen umfasst.

## Revendications

1. Système permettant de traiter des gaz d'échappement contenant du NOₓ en provenance d'un moteur, ledit système comprenant :
un monolithe poreux (20) présentant une première composition catalytique destinée à une réduction catalytique sélective de NOₓ et présentant un premier volume ;
un filtre à matière particulaire à écoulement pariétal et couplage direct (22) présentant une seconde composition catalytique destinée à une réduction de la matière particulaire et à une réduction catalytique sélective de NOₓ et présentant un second volume ; et
un rapport volumique du premier volume sur le second volume compris entre 1:10 et 1:2, dans lequel ledit monolithe poreux (20) est en communication fluidique avec ledit, et incorporé en amont dudit, filtre à matière particulaire (22) et
dans lequel ledit monolithe poreux (20) présente une capacité thermique inférieure à celle dudit filtre à matière particulaire (22) et ledit monolithe poreux (20) présente une capacité thermique spécifique qui est comprise entre 20 et 80 % de la capacité thermique spécifique dudit filtre à matière particulaire (22), et
dans lequel la première composition catalytique est présente sur le monolithe poreux (20) à concurrence d'une première charge, en poids par unité de volume, et la seconde composition catalytique est présente sur le filtre à matière particulaire à écoulement pariétal (22) à concurrence d'une seconde charge, en poids par unité de volume, et le rapport de la première charge sur la seconde charge est compris entre 15:1 et 1,5:1.

2. Système selon la revendication 1, dans lequel lesdites première et seconde compositions catalytiques comprennent un tamis moléculaire à base d'aluminosilicate ou de silico-alumino-phosphate, dopé à un métal de base.

3. Système selon la revendication 2, dans lequel ledit monolithe poreux (20) présente une charge catalytique pour réduction catalytique sélective (RCS), de manière préférée comprise entre 0,183 et 0,915 g/cm³ (3 et 15 g/in³), ce qui est supérieur à une charge catalytique RCS présente sur ledit filtre à matière particulaire (22).

4. Système selon la revendication 1, dans lequel lesdites première et seconde compositions catalytiques sont différentes, sous réserve qu'au moins une partie desdites première et seconde compositions catalytiques comprennent un tamis moléculaire à base d'aluminosilicate ou de silico-alumino-phosphate, dopé à un métal de base.

5. Système selon la revendication 1, dans lequel ladite deuxième composition catalytique destinée à une réduction catalytique sélective de NOₓ est revêtue et/ou imprégnée sur un côté aval dudit filtre à matière particulaire (22).

6. Système selon la revendication 1, dans lequel ladite seconde composition catalytique destinée à une réduction catalytique sélective de NOₓ est revêtue et/ou imprégnée sur un côté amont dudit filtre à matière particulaire (22).

7. Système selon la revendication 1, dans lequel ledit filtre à matière particulaire (22) se situe entre environ 0,01 mètre et environ 0,25 mètre en aval du monolithe poreux (20).

8. Système selon la revendication 7, comprenant en outre une source d'injection de réducteur, en communication fluidique avec, et fournie entre, ledit monolithe poreux (20) et ledit filtre à matière particulaire (22).

9. Système selon la revendication 1, dans lequel la première composition catalytique comprend une zéolithe dopée au fer et la seconde composition catalytique comprend une zéolithe dopée au cuivre.
